Europäisches Patentamt

European Patent Office

Office européen des brevets

(11) Numéro de publication: **0 263 746 B1**

# (12) FASCICULE DE BREVET EUROPEEN

(45) Date de publication de fascicule du brevet: **08.04.92**   (51) Int. Cl.⁵: **G06K 7/06**, G06K 19/067

(21) Numéro de dépôt: **87402179.3**

(22) Date de dépôt: **30.09.87**

(54) **Système à lecture de cartes d'identification à contacts électriques.**

(30) Priorité: **02.10.86 FR 8613760**

(43) Date de publication de la demande:
**13.04.88 Bulletin 88/15**

(45) Mention de la délivrance du brevet:
**08.04.92 Bulletin 92/15**

(84) Etats contractants désignés:
**DE GB IT**

(56) Documents cités:
**EP-A- 0 189 039**
**WO-A-79/00543**
**DE-A- 3 235 654**
**DE-A- 3 343 727**

**PATENT ABSTRACTS OF JAPAN, vol. 9, no. 329 (P-416) [2052], 24 décembre 1985; & JP-A-60 153 583 (MITSUBISHI JUSHI K.K.) 13.08.1985**

**PATENT ABSTRACTS OF JAPAN, vol. 10, no. 22 (P-424) [2079], 28 janvier 1986; & JP-A-60 173 789 (NIPPON DENSHIN DENWA KOSHA) 07.09.1985**

(73) Titulaire: **FRANCELCO, SOCIETE ANONYME**
**29, rue des Bas Rogers**
**F-92150 Suresnes(FR)**

(72) Inventeur: **Rozet, Dominique**
**10 Rue Ferdinand Dreyfus**
**F-78120 Rambouillet(FR)**

(74) Mandataire: **Fort, Jacques et al**
**CABINET PLASSERAUD 84, rue d'Amsterdam**
**F-75009 Paris(FR)**

## Description

La présente invention concerne les systèmes comportant des cartes d'identification munies de contacts électriques parallèles et destinées à être introduites dans un lecteur muni d'un dispositif d'établissement de liaisons électriques avec les contacts de la carte. Elle est plus particulièrement applicable aux cartes dites intelligentes ou à mémoire, constituées par une plaque de quelques millimètres d'épaisseur contenant des composants électroniques de mémorisation et de traitement de données, qui obligent à prévoir sur la carte un grand nombre de contacts, typiquement environ 60. Sur de telles cartes, les liaisons accidentelles, notamment par les doigts de l'utilisateur, sur les contacts peuvent provoquer des incidents de fonctionnement, notamment en modifiant le contenu des mémoires ou en provoquant des opérations intempestives.

WO-A-7 900 543 décrit un dispositif de connexion avec une carte dont les contacts sont placés, parallèlement les uns aux autres, sur une grande face de la carte. Lorsque la carte est "avalée" par un moteur, sa tranche avant pousse un tiroir qui fait basculer une plaque tournant sur un boîtier. Des contacts portés par la plaque basculante viennent alors s'appliquer contre les contacts de la carte. On fait ensuite osciller la carte de part et d'autre d'une position moyenne, dans sa direction d'engagement et dans la direction opposée.

EP-A-0 189 039 décrit une carte ayant des contacts accessibles à partir de l'extérieur de la carte par une fente pratiquée transversalement à la direction des contacts dans une couche de protection. En conséquence, la fente ne débouche pas sur la tranche de la carte à partir de laquelle s'étendent les contacts.

La présente invention vise à fournir un système dont les cartes d'identification présentent des contacts protégés lors des manipulations et dont le lecteur permet d'assurer une liaison électrique sûre avec les contacts sans endommager ces derniers lors de l'introduction de la carte.

L'invention est définie par les revendications.

Selon des caractéristiques préférées, pour éviter l'endommagement des contacts ou des lames, des moyens de détrompage sont avantageusement prévus sur le lecteur et les cartes et empêchent d'engager à fond la carte dans une orientation incorrecte ; les contacts se terminent avantageusement avant la tranche de la carte, de façon à les soustraire aux actions extérieures.

Dans un premier mode de réalisation de l'invention, ce trajet est défini dans le boîtier par un couloir d'introduction ayant une partie avant dont le fond est à distance suffisante des coudes des lames pour éviter le frottement des lames sur les contacts jusqu'à un emplacement déterminé où ce fond est en pente relevant les contacts vers les lames. Des moyens élastiques, tels qu'une lèvre, solidaires du boîtier sont alors avantageusement prévus pour maintenir la carte contre le fond.

Dans un autre mode de réalisation de l'invention, le lecteur comporte un boîtier dans lequel est ménagé un couloir imposant à la carte un trajet rectiligne d'introduction et il porte un chariot déplaçable par la carte transversalement à l'introduction de cette dernière, lorsque la carte a dépassé ledit emplacement déterminé, pour permettre aux lames élastiques de s'appliquer élastiquement contre les contacts.

L'invention sera mieux comprise à la lecture de la description qui suit de modes particuliers de réalisation de l'invention, donnés à titre d'exemples non limitatifs. La description se réfère aux dessins qui l'accompagnent, dans lesquels :

- la figure 1 est un schéma de principe en perspective, montrant une carte suivant l'invention et l'aspect extérieur d'un dispositif d'établissement de contacts électriques destiné à la recevoir ;
- la figure 2 est une vue de détail à grande échelle, montrant une fraction de la carte de la figure 1 proche de la tranche sur laquelle débouchent les saignées portant les contacts ;
- la figure 3 est une vue de détail à grande échelle, montrant un premier mode de réalisation de l'invention en coupe suivant un plan parallèle au trajet d'introduction de la carte ;
- les figures 4A et 4B montrent des étapes successives d'introduction de la carte dans le dispositif de la figure 3 ;
- la figure 5, similaire à la figure 3, montre un autre mode de réalisation ;
- les figures 6A et 6B montrent plusieurs étapes successives d'introduction de la carte dans le dispositif d'établissement de contacts de la figure 5.

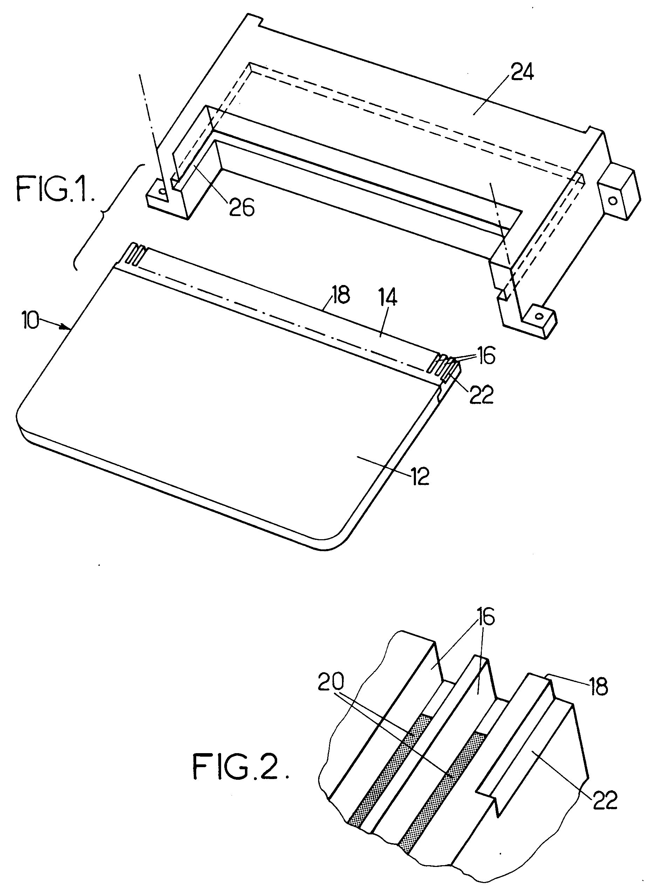

La carte 10 montrée en figure 1 se présente sous forme d'un plaque de quelques millimètres d'épaisseur (2 à 3 mm en général) et peut être regardée comme constituée d'un corps 12 et d'un connecteur 14. Le corps 12 contient les composants électroniques de la carte (par exemple microprocesseur, mémoire vive, mémoire morte, etc) généralement enrobés dans une matière plastique. Le connecteur 14, solidarisé de façon permanente du corps de la carte, constitue une zone latérale de cette dernière. Il porte les contacts destinés à établir, avec des éléments coopérants d'un lecteur, les liaisons électriques nécessaires aux transactions à réaliser. Les contacts électriques du connecteur 14 sont reliés de façon permanente aux composants contenus dans le corps 12 par des liaisons enterrées.

Dans le connecteur 14, en matériau isolant, sont praituqées des rainures parallèles 16, dont quelques unes seulement sont représentées sur la figure 1, réparties régulièrement. On peut sans difficulté répartir ces rainures suivant un pas de 1,27 mm et même descendre jusqu'à 1 mm. Chacune des rainures à une profondeur constante et débouche sur la tranche 18 de la carte 10. Le fond de chaque saignée comporte, à partir d'une distance de quelques dixièmes de millimètre de la tranche, un contact électrique 20 qui peut être formé par une simple piste dorée, éventuellement réalisée en même temps que les connections électriques du corps 12 de la carte ou être un élément rapporté. Une largeur de l'ordre de 0,5 mm et une épaisseur de 0,2 mm seront généralement suffisantes pour les contacts 20. La zone isolante terminale qui subsiste entre la tranche 18 et les contacts 20 permet d'éviter que le contact métallique ne soit souillé par les doigts du manipulateur de la carte.

La carte est avantageusement munie de moyens de détrompage interdisant de l'enfoncer complètement dans une orientation incorrecte. Sur la figure 1, ces moyens sont constitués par une encoche 22 ménagée sur l'une des arêtes de la carte, destinée à coopérer avec une butée prévue dans le lecteur.

Le lecteur n'est pas représenté dans son ensemble sur les figures car il peut avoir une constitution générale quelconque compatible avec la carte. Il est muni d'un dispositif d'établissement de contacts 24 présentant un couloir 26 d'insertion, qui impose un trajet précis à la carte 10 lors de son introduction.

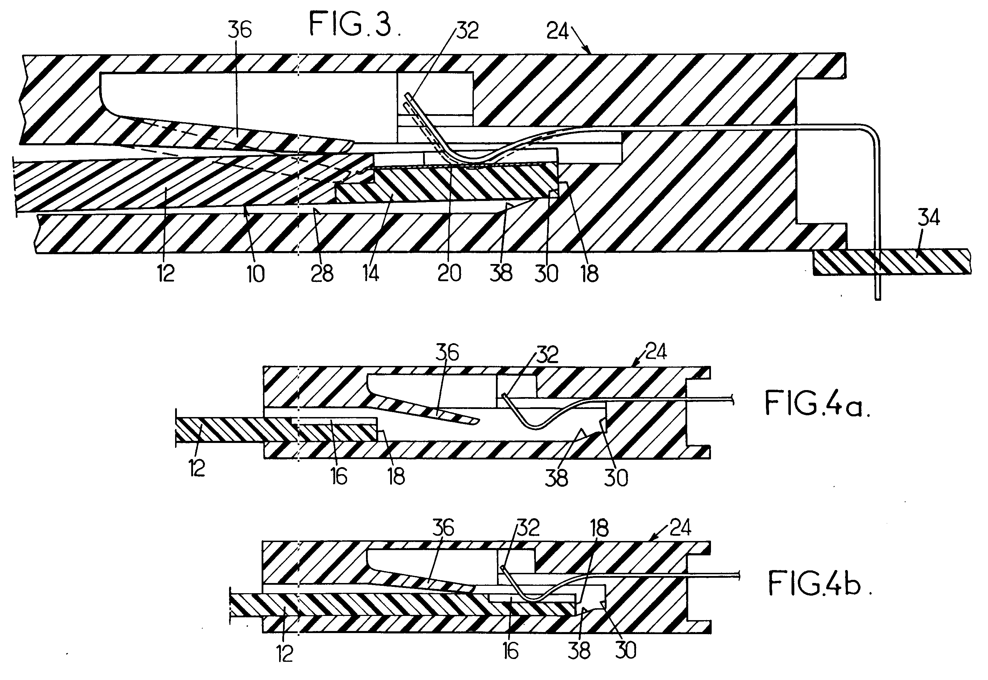

Dans le mode particulier de réalisation de ce dispositif montré en figure 3, le couloir 26 ménagé dans le boîtier 24 du dispositif d'établissement de contacts présente un fond 28 présentant un décrochement qui sera décrit en détail plus loin. Le couloir 28 se termine par une face 30 de butée de la tranche 18 de la carte 10, définissant la position de lecture de la carte.

Le corps du dispositif 24 porte des lames élastiques parallèles 32, en nombre égal à celui des contacts 20 et disposées au même écartement. Ces lames sont encastrées dans le corps du boîtier et en débordent de part et d'autre. A l'arrière, elles constituent des pattes de raccordement avec une carte de circuit imprimé 34 appartenant au lecteur. A l'avant, elles présentent un coude dirigé vers le trajet d'introduction de la carte 10. On pourra souvent utiliser des lames en bronze phosphoreux ou en bronze au beryllium de 0,2 mm environ d'épaisseur, dont la longueur depuis l'encastrement jusqu'au coude est de 8 à 10 mm. Les pattes peuvent être montées dans le corps du boîtier 24 en les enfilant dans des trous ménagés dans le corps, si celui-ci est fabriqué en matière plastique moulée. Les parties encastrées des lames 32 peuvent alors être munies de becs rabattus formant harpon de retenue. Le montage des lames est facilité si, lors de la fabrication, elles sont reliées par une bande terminale qui est ensuite tronçonnée.

Le fond 28 présente une partie principale dont la distance au coude des lames, lorsque ces dernières occupent leur position libre indiquée en tirets sur la figure 3, est supérieure à l'épaisseur du connecteur au niveau des contacts. Des moyens élastiques ménagés dans le boîtier 24, constitués par exemple par une lèvre 36 venue de moulage avec le boîtier, maintiennent la carte 10 en contact avec le fond 28 lors de son introduction. La partie principale se termine par une rampe 38 et une zone terminale parallèle à la partie principale, dont le décalage par rapport à cette dernière est tel que les lames 32 s'appuient élastiquement sur les contacts 20 lorsque la tranche de la carte est en butée contre la face 30.

Les positions successives prises par la carte 10 lors de son introduction apparaissent sur les figures 4A, 4B et 3. Initialement, la carte 10 glisse sur la partie principale du fond 28 contre laquelle elle est appliquée par la lèvre 36. Cette dernière ne frotte en aucun cas contre les contacts (figure 4A). Les contacts passent ensuite sous les coudes des lames 32, sans les toucher (figure 3B) jusqu'à ce que la carte aborde la rampe 38. En fin de course, les contacts 20 se soulèvent, viennent en contact avec les coudes des lames 32, glissent sur eux de façon à assurer un autonettoyage, et garantissent une liaison électrique satisfaisante sous une pression qui peut être de quelques dizaines de grammes pour l'ensemble des contacts.

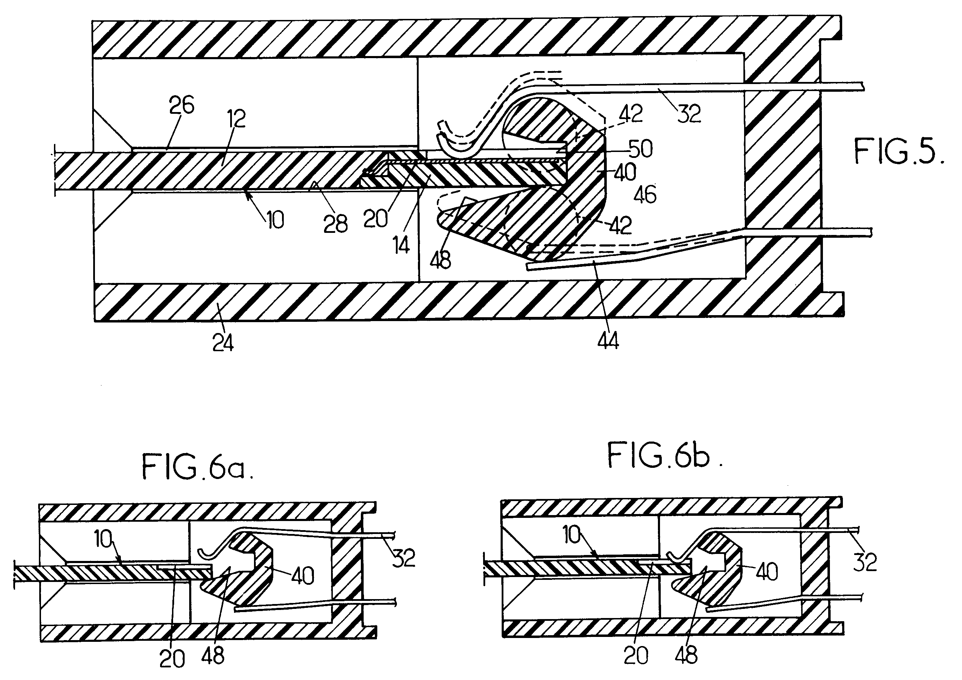

Dans la variante de réalisation de l'invention montrée en figure 5 (où les organes déjà décrits sont désignés par le même numéro de référence), le fond 28 du couloir 26 est plan sur toute sa longueur et parallèle aux faces supérieures, de sorte que le trajet d'introduction de la carte est entièrement rectiligne. Les lames 32 sont encore encastrées dans le corps du boîtier 24 mais leur élasticité tend à les amener dans une position d'appui contre les contacts 20 (figure 5). Au repos, ces lames sont soulevées dans la position montrée en tirets sur la figure 5 par un chariot 40 déplaçable dans le boîtier transversalement à la direction d'insertion de la carte 10. Ce chariot est par exemple muni de tenons 42 coulissant dans des rainures du boîtier. Des moyens élastiques, tels qu'une languette métallique 44 encastrée dans le fond du boîtier, excercent sur le chariot 40 une force, supérieure à l'élasticité des lames 32, qui tend à amener le chariot et les lames dans la position montrée en tirets.

Le chariot présente une encoche 46 présentant une rampe d'entrée 48 qui joue un rôle analogue à celui de la rampe 38 de la figure 3 et une face de butée 50. La rampe 48 a une forme telle que le connecteur 14, lorsqu'il s'enfonce dans l'encoche, repousse le chariot 40 de la position montrée en tirets à la position montrée en traits pleins : le chariot libère alors les lames 32 qui peuvent venir s'appuyer sur les contacts.

Les positions successives prises par les composants du dispositif lors de l'introduction de la carte apparaissent sur les figures 6A, 6B et 5 : lorsque la carte 10 aborde la rampe 48 du chariot (figure 6A) les lames 32 sont dans une position telle qu'elles ne peuvent frotter contre les contacts. Au fur et à mesure de l'enfoncement ultérieur de la carte 10, le chariot 40 est refoulé vers le bas et les lames 32 se rapprochent des contacts et viennent assurer la liaison avec eux. Dans la partie terminale de sa trajectoire pour venir en appui contre la face de butée 50, les contacts frottent contre les lames ce qui assure un autonettoyage.

**Revendications**

1. Système à lecture de cartes d'identification, comprenant des cartes (10) munies de contacts électriques (20) parallèles les uns aux autres, disposés sur une grande face de la carte (10) à partir d'une des tranches de ladite carte (10), et un lecteur muni d'un dispositif (24) d'établissement de liaisons électriques avec les contacts de la carte ayant des lames élastiques souples (32), en matériau conducteur, qui au repos dégagent un trajet d'introduction de la carte qui est parallèle aux contacts jusqu'à un emplacement déterminé de la carte dans le lecteur, la carte (10) et le dispositif (24) présentant des moyens d'appui qui coopèrent pour provoquer, au-delà dudit emplacement, le déplacement relatif l'un vers l'autre des contacts (20) et des lames (32), transversalement au trajet d'introduction de la carte, jusqu'à presser les contacts et les lames les uns contre les autres en fin d'introduction de la carte (10), caractérisé en ce que lesdits contacts (20) sont disposés au fond de rainures parallèles respectives (16) pratiquées sur la grande face et débouchant sur ladite tranche et en ce que les lames (32) ont une partie arrière encastrée dans un boîtier fixe et une partie avant présentant un coude dirigé vers le trajet d'introduction de la carte dans le boîtier.

2. Système selon la revendication 1, caractérisé en ce que ledit trajet est défini dans le boîtier par un fond (28) à distance suffisante des coudes des lames (32) pour éviter le frottement des lames sur les contacts (20) jusqu'à ledit emplacement déterminé où ce fond est en pente (38) relevant les contacts (20) vers les lames (32).

3. Système selon la revendication 2, caractérisé en ce que des moyens élastiques, tels qu'une lèvre (36), solidaires du boîtier sont prévus pour maintenir la carte (10) contre le fond (28).

4. Système selon la revendication 1, caractérisé en ce que dans le boîtier est ménagé un couloir (26) imposant à la carte un trajet rectiligne d'introduction et qui porte un chariot (40) déplaçable par la carte transversalement au sens d'introduction de cette dernière, lorsque la carte a dépassé ledit emplacement déterminé, pour permettre aux lames élastiques (32) de s'appliquer élastiquement contre les contacts.

5. Système selon l'une quelconque des revendications précédentes, caractérisé en ce que des moyens de détrompage (22) sont prévus sur le lecteur et les cartes (10) et empêchent d'engager à fond la carte dans une orientation incorrecte.

6. Système selon l'une quelconque des revendications précédentes, caractérisé en ce que les contacts (20) se terminent avant la tranche (18) de la carte, de façon à les soustraire aux actions extérieures.

**Claims**

1. System including reading of identification cards, comprising cards (10) provided with mutually parallel electrical contacts, located on a major surface of the card (10) from one of the edges of said card (10) and a reader provided with a device (24) for establishing electrical connections with the contacts of the card, having flexible resilient blades (32) of conducting material, which at rest clear a card introduction path which is parallel to the contacts up to a predetermined location of the card in the reader, the card (10) and device (24) having abutment means which cooperate for causing, beyond said location, a relative movement of the contacts (20) and the blades (32) toward each other, tranversely to the introduction path of the card, until the contacts and blades are pressed against each other at the end of the introduction of the card (10), characterized in that said contacts (20) are located at the bottom of respective parallel grooves (16) formed on the major surface and opening on said edge and in that the blades (32) have a rear section embedded in a stationary housing and a front section having a bend directed toward the introduction path of the card into the housing.

2. System according to claim 1, characterized in that said path is defined in the housing by a bottom (28) at a sufficient distance from the bends of the blades (32) for avoiding friction of the blades on the contacts (20) until said predetermined location where the bottom has a slope (38) lifting the contacts (20) toward the blades (32).

3. System according to claim 2, characterized in that resilient means, such as a lip (36), fast with the housing are provided for maintaining the card (10) against the bottom (28).

4. System according to claim 1, characterized in that a passage (26) is formed in the housing which forces the card to follow a rectilinear introduction path and which carries a carriage (40) movable by said card transversely to the direction of insertion of the latter, when the card has passed beyond said predetermined location, for allowing resilient application of the resilient blades (32) onto the contacts.

5. System according to any one of the preceding claims, characterized in that indexing means (22) are formed on the reader and on the cards (10) and prevent full insertion of the card in an incorrect angular position.

6. System according to any one of the preceding claims, characterized in that the contacts (20) terminate short of the edge (18) of the card, for protecting them against external aggression.

**Patentansprüche**

1. System zum Lesen von Identifikationskarten mit Karten (10), die mit zueinander parallelen elektrischen Kontakten (20) versehen sind, die von dem Rand der Karte (10) aus an einer großen Seitenfläche der Karte (10) angeordnet sind, und mit einer Leseeinrichtung, die eine Einrichtung (24) zum Erstellen der elektrischen Verbindungen mit den Kontakten an der Karte aufweist, die elastisch biegsame Zungen (32) aus leitendem Material aufweist, die in Ruhestellung eine Einführstrecke für die Karte, die zu den Kontakten parallel ist, bis zum Erreichen einer bestimmten Position der Karte in der Leseeinrichtung freigeben, wobei die Karte (10) und die Einrichtung (24) Stützeinrichtungen aufweisen, die nach dem Erreichen der bestimmten Position dazu beitragen, die Relativbewegung der Kontakte (20) und der Zungen (32) zueinander quer zur Einführrichtung der Karte zu bewirken, bis die Kontakte und die Zungen am Ende des Einführens der Karte (10) gegeneinander gedrückt werden, dadurch **gekennzeichnet,** daß die Kontakte (20) am Boden von entsprechenden parallelen Nuten (16) angeordnet sind, die in der großen Seitenfläche ausgebildet sind und in den Rand münden, und daß die Zungen (32) einen rückwärtigen Endbereich, der in einem festen Gehäuse eingebaut ist, und einen vorderen Endbereich, der einen zur Einführstrecke der Karte in das Gehäuse gerichteten Knick hat, aufweisen.

2. System nach Anspruch 1, dadurch **gekennzeichnet,** daß die Einführstrecke in dem Gehäuse durch einen Boden (28) in ausreichendem Abstand von den Knicken in der Zungen (32) definiert ist, um das Reiben der Zungen auf den Kontakten (20) bis zu der bestimmten Position zu vermeiden, wo der Boden geneigt ist (38) und die Kontakte (20) gegen die Zungen (32) nach oben bewegt.

3. System nach Anspruch 2, dadurch **gekennzeichnet,** daß die elastischen Einrichtungen, beispielsweise eine Lippe (36), mit dem Gehäuse einstückig vorgesehen sind, um die Karte (10) gegen den Boden (28) zu halten.

4. System nach Anspruch 1, dadurch **gekennzeichnet,** daß in dem Gehäuse einen Kanal (26) angeordnet ist, der der Karte eine geradlinige Einführstrecke vorschreibt und der ein Bewegungselement (40) aufweist, das durch die Karte quer zur Einschubrichtung dieser veschiebbar ist, um den biegsamen Zungen (32) zu ermöglichen, elastisch an den Kontakten anzuliegen.

5. System nach einem der vorhergehenden Ansprüche, dadurch **gekennzeichnet,** daß an dem Leser und den Karten (10) Vorrichtungen zum Verhindern eines irrtümlichen Einschiebens (22) vorgesehen sind und verhindern, daß die Karte in einer falschen Orientierung in Bezug auf den Boden eingeschoben wird.

6. System nach einem der vorhergehenden Ansprüche,
   dadurch **gekennzeichnet,** daß
   die Kontakte (20) vor dem Rand (18) der Karte enden, so daß sie äußeren Einwirkungen entzogen sind.

FIG.1.

FIG.2.

FIG.3.

FIG.4a.

FIG.4b.

EP 0 263 746 B1

FIG.5.

FIG.6a.

FIG.6b.